Europäisches Patentamt

European Patent Office

Office européen des brevets

(19)

(11) Numéro de publication : **0 349 358 B1**

## FASCICULE DE BREVET EUROPEEN

(12)

(45) Date de publication du fascicule du brevet :
**04.03.92 Bulletin 92/10**

(51) Int. Cl.⁵ : **B01J 37/20, B01J 37/22**

(21) Numéro de dépôt : **89401441.4**

(22) Date de dépôt : **26.05.89**

(54) **Procédé de présulfuration et de contrôle de l'activité de catalyseur de traitement d'hydrocarbures.**

(30) Priorité : **01.07.88 FR 8809049**
**15.03.89 FR 8903501**

(43) Date de publication de la demande :
**03.01.90 Bulletin 90/01**

(45) Mention de la délivrance du brevet :
**04.03.92 Bulletin 92/10**

(84) Etats contractants désignés :
**AT BE DE FR LU NL**

(56) Documents cités :
**EP-A- 0 181 253**
**FR-A- 2 413 127**
**FR-A- 2 556 612**
**US-A- 4 107 083**

(73) Titulaire : **EURECAT EUROPEENNE DE RETRAITEMENT DE CATALYSEURS**
**Quai Jean Jaurès B.P. 45**
**F-07800 La Voulte-sur-Rhône (FR)**

(72) Inventeur : **Berrebi, Georges**
**17, rue Barnave**
**F-26500 Bourg Les Valence (FR)**

(74) Mandataire : **Andreeff, François et al**
**INSTITUT FRANCAIS DU PETROLE 4, avenue de Bois-Préau**
**F-92502 Rueil-Malmaison (FR)**

Jouve, 18, rue Saint-Denis, 75001 PARIS

EP 0 349 358 B1

## Description

On rapellera brièvement que souvent l'agent de sulfuration utilisé par les raffineurs est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogène (voir U.S.A. 4,172,027).

Les métaux des catalyseurs utilisés en raffinage, hydroraffinage ou en pétrochimie, qu'ils soient neufs ou régénérés, sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en oeuvre.

Actuellement comme expliqué plus haut, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'ont permis les procédés efficaces de la demanderesse (US-A-4530917, US-A-4719195 ou EP-B-181254) dans lesquels un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis par exemple en contact d'hydrogène.

D'une façon plus précise, dans le brevet européen EP-B-181 254, le procédé de sulfuration du catalyseur est caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement "hors site" ou "ex situ", qu'elle soit éffectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus ou moins en communication directe avec ces réacteurs, nécessitant d'opérer dans des conditions opératoires, (température, pression ou autres), imposées au moins en partie par les conditions opératoires des réacteurs eux mêmes ou des annexes de ces réacteurs (zone d'hydrogènation préalable du catalyseur par exemple).

Le procédé d'EP-B-181 254 permet, lorsque le catalyseur sera soumis dès son démarrage de préférence sur le site ("in situ") à la réaction classique d'activation en présence d'hydrogène, (généralement au dessus de 100°C), de procéder, ensuite grâce à la présence d'hydrogène sur le site, à la sulfuration au taux requis, stoechiométrique ou non stoechiométrique, du ou des métaux actifs entrant dans la composition du catalyseur. Le procédé consiste à incorporer dans une première étape, en l'absence d'hydrogène, dans la porosité du catalyseur neuf ou régénéré au moins un agent de sulfuration, l'agent de sulfuration étant un polysulfure de formule générale :

$$R - S_{(n)} - R'.$$

Ledit agent de sulfuration est utilisé en solution dans un solvant.

Dans la deuxième étape, réalisée "in situ", et de préférence au-dessus de 150° C, on procède à une étape d'activation du catalyseur effectuée en présence d'hydrogène, la quantité requise de soufre se fixant grâce à la présence d'hydrogène, sur le ou les métaux entrant dans la composition dudit catalyseur.

Dans le polysulfure de formule :

$$R - S_{(n)} - R'$$

n est un nombre entier de 3 à 20, de préférence de 4 à 8 et plus particulièrement de 5 à 7 ; R et R', identiques ou différents, représentent des radicaux organiques renfermant chacun 1 à 150 atomes de carbone par molécule, de préférence soit 10 à 60 atomes de carbone soit 5 à 40 atomes de carbone et plus particulièrement 7 à 16, ces radicaux étant choisis dans le groupe constitué par les radicaux alkyles, c'est-à-dire, saturés ou insaturés, linéaires ou ramifiés ou de type naphténique, les radicaux aryles, les radicaux alkylaryles et les radicaux arylalkyles, ces divers radicaux pouvant comporter au moins un hétéro-atome. R' éventuellement peut également ment être un atome d'hydrogène.

On peut citer, à titre d'exemple préféré de polysulfure, le ditertiododécylpolysulfure (n = 5) où R et R' sont chacun un radical dodécyle.

Ce produit est commercialisé par exemple par ELF AQUITAINE sous le nom TPS 32, notamment parce qu'il contient 32 % poids environ de soufre.

On peut citer également le ditertionoonylpolysulfure (n = 5) où R et R' sont chacun un radical tertio-nonyle.

Ce produit est commercialisé par ELF AQUITAINE sous le nom TPS 37, notamment parce qu'il contient 37 % poids environ de soufre ou par PENNWALT sous le nom de TNPS.

Pour des raisons de procédure, on peut évidemment utiliser ces agents de sulfuration du type polysulfure seuls ou en mélange entre eux dans des proportions judicieusement choisies.

La première étape rappelée ci-dessus est effectuée en l'absence d'hydrogène et permet d'obtenir avec une très grande précision le degré de sulfuration total ou partiel demandé par l'utilisateur. Cette incorporation de soufre est effectuée entre 0 et 50°C et de préférence entre 10 et 35°C et de préférence encore à la température ambiante.

L'agent de sulfuration est utilisé, dilué dans un solvant adéquat qui dépend notamment de la nature de l'agent de sulfuration c'est-à-dire de R et R′, radicaux qui déterminent la teneur en soufre incorporé dans le catalyseur généralement par capillarité ou par porosité. Les processus de sulfuration varient en fait selon les coupes à traiter ultérieurement en présence des catalyseurs traités conformément à l'invention.

A l'issue de cette première étape, on procède à une deuxième étape qui est scindée en deux parties :

La première partie de cette deuxième étape est effectuée in-situ ou ex-situ. La première partie de la deuxième étape est effectuée en l'absence d'hydrogène. Elle est effectuée en présence d'air ou d'un gaz inerte. Selon une méthode préferée, elle est effectuée en présence d'au moins de la vapeur d'eau ou d'au moins de l'air humide ou un gaz inerte humide pendant au moins 5 minutes, environ, "in-situ" ou "ex-situ" à une température comprise entre 65 et 270 °C sous une pression comprise entre environ 0,5 et 70 bars (0,05 et 7 MPa), le catalyseur étant ensuite séché.

Ultérieurement, sur le site ou à proximité du site (sur lequel le catalyseur sera utilisé pour le traitement de diverses charges), lors de la réaction classique d'activation, effectuée en présence d'hydrogène (deuxième étape du procédé de la demande de brevet européen EP-B-181 254), l'agent de sulfuration introduit dans le catalyseur en quantités prédéterminées, sera capable de donner naissance à de l'hydrogène sulfuré lequel, en présence d'hydrogène, conduira au sulfure ou sulfures désirés du ou des métaux présents dans le catalyseur.

De préférence on peut opérer pendant au moins 5 minutes et de préférence au plus 10 heures entre 65 et 265°C, sous un pression comprise entre 0,5 et 70 bars (0,05 et 7 MPa), de préférence entre 85 et 260°C et plus particulièrement entre 95 et 150°C.

Lorsque l'on travaille en présence de vapeur d'eau, celle-ci doit être surchauffée à au moins 110°C.

Lorsque l'on opère en présence de gaz inerte humide ou d'air humide, il convient d'opérer avec une humidité relative de l'ordre de 2 à 60 % en volume à l'étape de séchage, et à une température comprise entre 105 et 200°C, de préférence entre 110 et 170°C. On peut encore utiliser un gaz dont la teneur en eau est comprise entre 50 et 100 % (vapeur d'eau pure), de préférence entre 90 et 100 % et opérer entre 5 minutes et 10 heures sous 0,05 à 7 MPa à une température inférieure à 200°C, de préférence inférieure à 170°C.

Au cours de la deuxième étape, le catalyseur est porté soit à une température égale à au moins 275° C, pendant au moins 1 minute.

La deuxième partie de la deuxième étape est généralement effectuée in-situ et peut donc se confondre avec le démarrage ou la mise en marche proprement dite de la réaction de raffinage et de pétrochimie pour laquelle est conçu le catalyseur préparé selon la présente invention, dans le cas précisement où une telle réaction est faite au-dessus de 275° C.

Lorsque la température choisie pour la réaction de raffinage ou de pétrochimie est inférieure à 275 ° C (par exemple, ce peut être le cas des hydrodésulfurations d'essences ou de kérosènes), il suffit alors d'abaisser la température utilisée pour l'activation du catalyseur dans la deuxième partie de la deuxième étape après cette étape à la température convenable pour la réaction de raffinage ou de pétrochimie.

On a constaté que dans la première partie de la deuxième étape, en dépit de l'absence d'hydrogène, le catalyseur se sulfure, c'est-à-dire, que les oxydes des métaux actifs du catalyseur se transforment en sulfures. Ce phénomène s'observe aisément par analyse du catalyseur, lequel d'ailleurs devient noir. Par contre, des tests de chimisorption montrent que tant que le catalyseur n'atteint pas la température de 275° C et ne reste pas au moins quelques minutes à au moins 275° C, ce catalyseur reste démuni d'activité catalytique.

L'invention concerne l'introduction d'au moins un additif à base d'un halogène ou de phosphore au cours d'une telle méthode de présulfuration décrite ci-dessus.

La présente invention concerne un procédé d'introduction d'au moins un additif à base d'un halogène ou de phosphore au cours d'un procédé de traitement en deux étapes d'un catalyseur neuf ou régénéré renfermant (a) un support à base d'au moins un oxyde d'un métal ou d'un métalloïde et (b) au moins un métal actif, procédé de traitement dans lequel, dans une première étape réalisée "ex-situ" entre 0 et 50°C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

où n est un nombre entier de 3 à 20 et où R′ représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode dans laquelle on traite le catalyseur, en présence d'au moins de la vapeur d'eau ou d'au moins un gaz inerte humide ou de l'air humide pendant au moins 5 minutes environ, "in-situ" ou ex-situ", à une température comprise entre 65 et 275°C, sous une pression comprise entre environ 0,5 et 70 bars (0,05 et 7 MPa), le catalyseur étant à ce stade éventuellement séché avant son utilisation en raffinage notamment. Le procédé d'introduction d'additif étant caractérisé en ce que au cours de la première étape on ajoute en poids, (poids exprimé en halogène ou en phosphore), par rapport au poids de polysulfure ou des polysulfures, 0,1 à 10 % de préférence 1 à 6 % et plus particulièrement 2 à 5 % d'au moins un additif choisi dans le groupe constitué par le phosphore, les composés phosphorés, les halogènes et les composés halogénés.

L'invention convient particulièrement bien pour les catalyseurs de craquage et d'hydrocraquage d'hydrocarbures et plus généralement pour les réactions de conversion d'hydrocarbures et pour les opérations de raffinage.

Le procédé selon l'invention implique que la première partie de la première étape soit effectuée en présence au moins de vapeur d'eau ou au moins d'un gaz inerte humide, notamment de l'air humide.

On utilisera, en poids, avantageusement 0,5 à 20 % en poids du ou des additifs choisi de façon à incorporer dans le catalyseur la quantité désirée de l'additif considéré.

Le ou les additifs peuvent être ajoutés, par exemple, avec la solution du du des polysulfures utilisés, soit à l'état pur, soit dissous dans un solvant adéquat. Ce solvant peut être du même type que le solvant choisi pour dissoudre le polysulfure, à savoir, par exemple :
– une essence légère bouillant par exemple entre environ 60 à 95 °C,
– une essence de type hexane bouillant entre 63 et 68°C environ,
– une essence de type F bouillant entre environ 100 et 160 °C et contenant généralement 10 à 20 % d'hydrocarbures aromatiques, par exemple 15 % (en volume),
– une essence de type "white spirit" bouillant entre environ 150 et 250°C et renfermant généralement 14 à 22 % d'hydrocarbures aromatiques, par exemple 17 %, en volume,
– toute coupe hydrocarbonée ou non, équivalente aux essences précédentes.

Le ou les composés organiques halogènes et/ou phosphorés selon l'invention, peuvent être utilisés dans un autre solvant adéquat tel que, par exemple, l'eau, les alcools (méthanol, éthanol, propanol, etc.) ou d'autres liquides minéraux ou organiques connus pour dissoudre les additifs choisis et dans la mesure ou le solvant choisi est compatible avec les autres produits ou solvants mis en oeuvre dans le procédé.

Comme additif halogéné on utilisera avantageusement le chlore, le brome, le fluor et l'iode, l'acide chlorhydrique, l'acide bromhydrique, l'acide fluorhydrique, l'acide iodhydrique ou tout autre composé halogéné par exemple un composé choisi dans le groupe constitué par les halogénés d'hydrocarbylaluminium de formule générale $Al\ R_x\ X_y$ où R représente un groupement hydrocarboné contenant par exemple jusqu'à 12 atomes de carbone tel que alkyl, aryl, aralkyl, alkaryl, cycloalkyl, X représentant un halogène (chlore ou brome notamment) et x ayant une valeur de 1 à 1,5, y ayant une valeur de 1,5 à 2, avec de préférence x = 1, y = 2, avec x + y = 3 (comme exemples de tels composés, on peut mentionner notamment le sesquichlorure d'éthylaluminium, le dichloroéthylaluminium, le dichloroisobutylaluminium et le dibromomethylaluminium). On peut utiliser également les acides halogénocarboxyliques de formule $R_1\ COOH$ dans laquelle $R_1$ est un radical alkyl halogéné, notamment ceux qui renferment au moins un atome d'halogène en alpha du groupe COOH avec, au total, de 2 à 10 atomes de carbone par molécule. Une classe d'acides pouvant être utilisée inclut les acides halogénocarboxyliques de formule $R'_1\ COOH$ dans laquelle $R'_1$ est un reste halogénoalkyl renfermant de 1 à 3 atomes de carbone, de formule $C_m\ H_p\ X_q$ où X est un halogène (fluor, chlore, brome, iode), m = 1,2 ou 3, p est égal à zéro ou à un nombre entier, q est un nombre entier, avec par exemple la condition que p + q = 2 m + 1. On utilisera également notamment un acide halogénoacétique de formule $R_2\ COOH$ dans laquelle $R_2$ est un reste halogénométhyle de formule $Cx_n\ H_{3-n}$ où X est le fluor, le chlore, le brome ou l'iode avec n entier de 1 à 3. On peut citer comme acides utilisables, les acides trifluoroacétique, difluoroacétique, monofluoroacétique, trichloroacétique, dichloroacétique, monochloroacétique, tribromoacétique, dibromoacétique, monobromoacétique, triiodoacétique, diiodoacétique, monoiodeacétique, pentafluoropropionique, fluor-2-propionique, dichloro-2-prioionique, chloro-2-propionique, heptafluorobutyrique, fluoro-2-butyrique ou chloro-2-butyrique. Les exemples précédents ne sont pas limitatifs.

On peut également utiliser les halogénés d'alkyle, d'aryle, d'alkylaryl et d'aralkyl de radical alkyle renfermant par exemple 1 à 6 atomes de carbone par molécule : on citera le chlorure de méthyle, le chlorure de méthylène, le chloroforme, le tétrachlorure de carbone, le dichloroéthane, etc. On pourra également utiliser divers composés halogénés, par exemple le chlorure de thionyle, le chlorure de nitrosyle, l'héxafluoroacétylacétone, la 2-thénoyltrifluoroacétone-TTA, la tri-fluoroacétylacétone. On citera également à titre non limitatif, l'alpha-chloralose, le béta-chloralose, le chloramine-B hydrate, le chloramine-T hydrate, le chloramphénicol, le tétrachlorobenzoquinone, la chloroacétal-déhyde, la chloroacétaldéhyde diéthyl acétal, la chloroacétadehyde diméthyl acétal, le 2 chloroacétamide, la chloroacétone, la chloroacétonitrile, la 2-chloroacétophénone, la 2'-chloroacétophénone, la 3'-chloroacétophénone, la 4'chloroacétophénone, le chlorure de chloroacétyl, le 2-chloroacrylontrile, la 2-chloroaniline, la 3-chloroaniline, la 4-chloroaniline, le 3-chloroanisole, le 4-chloronisole, le 1-chloro-anthracène, le 2-chloro-anthracène, le 2-chlorobenzaldéhyde, le 4-chlorobenzaldéhyde, le chlorobenzène, le 4-chlorobenzènesulfonamide, l'acide 2-chlorobenzoïque, l'acide 3-chlorobenzoïque, l'acide 4-chlorobenzoïque, l'hydrazide 2-chlorobenzoïque, l'hydrazide 4-chlorobenzoïque, le 2-chloro-benzonitrile, le 3-chlorobenzonitrile, le 4-chlorobenzonitrile, le 2-chlorobenzophénone, le 3-chlorobenzophénone, le 4-chlorobenzophénone, la 2-chlorobenzothiazole, le 4-chlorobenzotrichlorure, le 2-chlorobenzotrifluorure, le 4-chlorobenzotrifluorure, le 2-chlorobenzoyl chlorure, le 3-chlorobenzoyl chlorure, le 4-chlorobenzoyl chlorure, le 4-chlorobenzylamine, le 2-chlorobenzyl bromure, le 3-chlorobenzyl bromure, le 2-chlorobenzyl chlorure, le 2-chlorobenzyl chlorure, le 4-chlorobenzyl chlorure, le 2-chlorobenzyl cyanure, le 3-chlorobenzyl cyanure, le 4-chlorobenzyl cyanure, le 2-(4 chlorobenzyl) pyridine, le 4-(4 chloro-benzyl) pyridine, le 1-chlorobutane, le 2-chlorobutane, le 4-chloro-1-butane, le 3-chloro-2-butanone, le 2-chloro-2-butène, l'acide 4-chlorobutyrique, le 4-chlorobutyronitrile, le 4-chlorobutyrophénone, le 4-chloro-2-butyrothiénone, le 4-chlorobutyrothiénone, le 4-chlorobutyryl chlorure, le 3-chloro-2-chlorométhyl-1-propène, l'acide 2-chlorocinnamique, l'acide 3-chlorocinnamique, le 2-chlorocyclohexanol, le 1-chlorodécane, le 4-chloro-2,6 diaminopyride, l'acide chlorofluoro-acétique, le 1-chloro-2,4-dinitrobenzène, le 1-chloro-3,4-dinitrobenzène, l'acide 2-chloroéthane-sulfonique, le 2-chloro-1-éthanesulfonyl chlorure, le 2-chloroéthanol, le 2(2-chloroéthoxy)éthanol, le N(2-chloroethyl)acétamide, le carbonate de chloroéthylène, le 2-chloroéthyl ether, le 3-chloro-4-fluoroaniline, le 4-chloro-2-fluoroaniline, le 2-chloro-6-fluorobenzal chlorure, le 2-chloro-6-fluorobenzaldéhyde, le 1-chloro-3-fluorobenzène, l'alcool 2-chloro-6-fluorobenzyl, l'acide 2-chloro-6-fluorophénylacétique, le 2-chloro-6-fluorophénylacétonitrile, le 2-chloro-4-fluorotoluène, le 2-chloro-6 fluorotoluène, le 4-chloro-2-fluorotoluène, le 1-chloroheptane, le 1-chlorohexadécane, le 1-chlorohexane, le 6-chloro-1-hexanol, le chlorohydroqulnone, le 5-chloro-2-hydroxyaniline, le 5-chloro-2-hydroxybenzamide, le chloro-2-iodobenzène, le chloroiodométhane, le 3-chloro-2-méthylaniline, le 3-chloro-4-méthylaniline, le 4-chloro-2-méthylaniline, le 3-chloro-3-méthylpentane, le 4-chloro-3-méthylphénol, le 2-chloro-2-méthylpropane, le 4-chloro-2-méthythiopyrimidine, le 1-chlorooctadécane, le 1-chlorooctane, le 3-chloro-2,4-pentanédione, le 1-chloro-3-pentanone, le 5-chloro-2-pentanone, le 2-chlorophénol, le 3-chlorophénol, le 4-chlorophénol, le 1-chloropropane, le 2-chloropropane, le 3-chloro-1,2 propanédiol, le 2-chloro-1-propanol, le 3-chloro-1-propanol, le chloropropène, l'acide 3-chloroproponique, le chlorure de 3-chloropriopionyl, le 3-chloropropyl acéate, l'acide 5-chlorosalicylique, le chlorotétradécane, le 4-chlorothiophénol, le 2-chlorotoluène, le 3-chlorotoluène, le 4-chlorotoluène, le 2-chloro-m-xylène, le 2-chloro-p-xylène, le 4 chloro-o-xylène et l'acide chlorosulfonique.

On citera également, à titre indicatif, le o-aminobenzofluorure, le m-aminobénzofluorone, le p-aminobenzofluorure, le 3-amino-4-chlorobenzotrifluorure, le 5-amino-2-chlorobenzotrifluorure, le benzoyl-1,1,1-trifluoroacetone, le l'o-bromobenzotrifluorure, le m-bromobenzotrifluorure, le p-bromobenzotrifluorure, le bromochlorodifluorométhane, le-1-bromo-2,4-difluorobenzène, l'o-bromofluorobenzène, le m-bromofluorobenzène, le p-bromofluorobenzène, le carbonyle fluorure, le chlorure trifluorure, l'o-chlorobenzotrifluorure, le m-chlorobenzotrifluorure, le p-chlorobenzotrifluorure, le chlorofluoroacétamide, le 1-chloro-1,1-difluoroéthane, le 3-chloro-4-fluoronitrobenzène, le 2-chloro-5-nitrobenzotrifluorure, le chloropentafluorobenzène, le chlorotrifluoroéthylène, le di-bromodifluorométhane, le dibromofluorométhane, le 1,2 dibromohexafluoropropane, le 3,4 dichlorobenzotrifluorure, l'acide difluoriacétique, le 2,4-fluoroaniline, le 2,5-difluoroaniline, le 2,6-difluoroaniline, l'o-difluorobenzène, le m-difluorobenzène, le p-difluorobenzène, le 1,1-di-fluoroéthylène, le 1,2-difluorotétrachloroéthane, le 2,4-dinitrofluoro-benzène, l'éthyltrifluoroacétate, le p-fluoroacétophénone, l'o-fluoroaniline, le m-fluoroaniline, la p-fluoroaniline, l'o-fluorobenzaldéhyde, le m-fluoroaldéhyde, le p-fluorobenzaldéhyde, le fluorobenzène, l'acide o-fluorobenzoique, l'acide p-fluorobenzoique, le m-fluorobenzotrifluorure, l'o-fluorobenzoyl chlorure, le m-fluorobenzoyl chlorure, la 4-fluoro-2-méthylaniline, la p-fluoronitrobenzène, la 4-fluoro-2-nitrotoluène, l'o-fluorophénol, le m-fluorophénol, le p-fluorophénol, la p-fluoropropiophénone, l'o-fluorotoluène, le m-fluorotoluène, le p-fluorotoluène, l'hexafluoro-2-butyne, le p-fluoronitrobenzène, le 4-fluoro-2-nitrotoluène, l'o-fluorophénol, le m-fluorophénol, le p-fluorophénol, la p-fluoropripiophenone, l'o-fluorotoluène, le m-fluorotoluène, le p-fluorotoluène, l'hexafluoro-2-butyne, l'hexafluoroéthane, l'hexafluoropropène, le méthylfluorure, le 1,1,2-trichlorotrifluoroethane, la 1,1,1-trifluoroacétone, le 2,2,2-trifluoroéthanol, l'acide trifluorométhanesulfonique, la m-trifluorométhylbenzaldéhyde, la p-trifluorométhylbenzaldéhyde, l'acide o-trifluorométhylbenzaldéhyde, le trifluorométhylbromure et le trifluorométhyliodure.

Cette liste n'est pas limitative. Parmi les additifs à base de phosphore, on citera, outre le phosphore, à titre d'exemples non limitatifs : (certains composés préférés étant indiqués également dans les exemples) l'acide phosphoreux, l'acide phosphorique, les acides polyphosphoriques, le 1,2-bis(diéthylphosphino)éthane, le bis(diméthylphosphino)méthane, le bis(diphénylphosphino)benzène, le(-)(2S, 3S)-bis(dipentafluorophénylphosphino)butane, le 1,4 bis(diphénylphosphino)butane, le 1,2-bis(diphénylphosphino)éthane, le cis-1,2-bis(diphénylphosphino)éthylène, le 1,3-bis(diphénylphosphino)propane, le 1,3-bis(phénylphosphino)propane, le cyclohexyldiphénylphosphine, le diéthylphosphine, le diméthylphénylphosphine, le diphénylènephénylphosphine, le diphénylphosphine, l'éthyldiphénylphosphine, le méthyldiéthoxyphosphine, le méthyldiphénylphosphine, le phényldimethoxyphosphine, le phénylphosphine, le tétraméthylbiphosphine, le tétraméthylbiphosphine disulfide, le tetraphenyldiphosphine disulfide, le p-tolydiphénylphosphine, la triallylphosphine, la tri-n-butylphosphine, la tri-t-butylphosphine, la tri(m-chlorophényl) phosphine, la tri(p-chlorophényl)phosphine, la tricyclohexylphosphine, la triéthylphosphine, la triméthylphosphine, la tri(1-naphthyl)phosphine, la triphénylphosphate, la triphénylphosphine, la triphénylphosphite, la tri-i-propylphosphite, la tri-n-propylphosphite, la tri(2-cyanoéthyl)phosphine, la tri(2-diméthylaminoéthyl)phosphite, la tri(4-diméthylaminophényl)phosphine, la tri(diméthylaminophényl)phosphine, le 1,1,1-tri(diphénylphosphinométhyl)éthane, le 1,1,1-tri(diphénylphosphino) méthane, la tri(p-fluorophényl)phosphine, la tri(o-méthoxyphényl) phosphine, la tri (p-méthoxyphényl)phosphine, la tri(p-trifluoromethoxyphényl) phosphine, la tri(trimethylsilyl)phosphine, la tri-o-tolyphosphine, la tri-m-tolyphosphine, la tri-p-tolyphosphine, le vinyldiphénylphosphine, l'allydiphénylphosphonium bromure, l'acide aminotri(méthylènephosphonique, l'amyltriphénylphosphonium bromure, le benzyltriphenylphosphonium chlorure, le chlorure de bis(diméthylamino)phosphoryl, le 1,2-bis (diméthylphosphino)éthane, le bis(diméthyiphosphino)méthane, le 1,2-bis (dipentafluorophénylphosphino)éthane, le bis(diphénylphosphine) acétylène, le 1,2-bis(diphénylphosphine)benzène, le 1,4- bis(diphénylphosphine) butane, le 1,2-bis(diphénylphosphine)éthane, le 1,3-bis (phénylphosphine)propane, le bis(triphénylphosphine)iminium nitrate, la t-butyldichloro-phosphine, la cycloexyphosphine, la d-n-amylphosphate, la dibromotriphénylphosphorane, la di-t-butylchlorophosphine, le di-n-butylphosphate, les dialkylphosphites de type $(RO)_2 POH$ ou les composés de formule $(RO)_3 P = O$, en citant encore le di-n-butylphosphite, la dicycloexylphosphine, le diéthylchlorophosphine, le diéthylenetriaminepenta (acide methylenephosphonique), l'acide di-(2-ethylhexyl) phosphorique, le diethylphosphite, l'acide difluorophosphorique hemihydrate, le, dilaurylphosphate, le dimethyl-methylphosphonate, le diphénylchlorophosphate, le diphénylchlorophosphine, le diphénylphosphine, le chlorure de diphénylphosphonlque, le di-n-propylphosphate, le di-i-propylphophite, le distearylphosphate, l'éthyldichlorophosphlne, l'éthyldichlorophosphine, l'éthylènediamine-tetra(acide méthylènephosphonique), l'acide fluorophosphorique, l'hexaméthylènediaminetetra(acide méthylènephosphonique), l'hexamethylphosphoramide, l'hydrogène hexafluorophosphate, l'acide hypophosphorique, la méthyldichlorophosphine, la méthyldiethoxyphosphine, la méthyldiphénylphosphine, le bromure de méthyltriphénylphosphonium, l'acide orthophosphorique, le phényldichlorophosphate, la phényldichlorophosphine, la phénylphosphine, l'acide phénylphosphonique, l'acide phosphorique, le bromure de phosphore, le chlorure de phosphore, le fluorure de phosphore, l'iodure de phosphore, l'oxyde de phosphore, le phosphore oxybromure, le phosphore oxychlorure, l'acide polyphosphorique, le tétra-n-butyl-phosphonium bromure, le tétramethylbiphosphine disulfure, le tétra-phénylphosphonium bromure, le tétraphosphore trisulfure, le thiophosphoryl chlorure, la p-tolydiphénylphosphine, la tri-n-butylphosphine, le tri-n-butylphosphite, le tricrésylphosphate, la tri-cyclohexylphosphine, le triéthylphosphate, le triéthylphosphite, le tri-éthylphosphonothioate, le triéthylphos-phate, la trimethylphosphine, la triméthylphosphite, le trioctylphosphine oxyde, la triphénylphosphine, le triphénylphosphine oxyde, le triphénylphosphine sulfure, le triphénylphosphite, le tri-n-propylphosphine, le tri-i-propylphosphite, le tri (2-chloroéthyl) phosphate, le tri(2-chloroéthyl)phosphite. Cette liste n'est pas limitative.

## EXEMPLES :

Dans les exemples qui vont suivre, on va étudier, pour un hydroraffinage d'une coupe hydrocarbonée l'incidence de la méthode de présulfuration de catalyseur adoptée, avec addition de composés halogénés et/ou phosphorés.

La coupe que l'on se propose d'hydroraffiner est une charge modèle renfermant en poids :

20 % de toluène

2 % de thiophène

78 % de cyclohexane

Les conditions opératoires sont les suivantes :

Témpérature : 350 °C

Pression totale : 60 bars (6 MPa)

VVH (vitesse spatiale) : 2 litres charge/litre catalyseur/heure

$H_2$/HC : Hydrogène/hydrocarbures 350 l/h

Durée du traitement : 48 heures

Volume du catalyseur mis en jeu : 40 cm³ dans tous les exemples.

L'analyse des effluents est effectuée par chromatographie en phase gazeuse. On mesurera dans chaque test l'activité en hydrogénation ("A") du toluène et l'activité en isomérisation ("I") du cyclohexane en méthylcyclopentane :

$$A = \text{Log} \frac{1}{1-X}$$

(logarithme népérien) où X est le taux de conversion du toluène, c'est-à-dire,

$$X = \frac{\Sigma P}{\Sigma T}$$

$\Sigma P$ représentant la somme des titres molaires des produits de conversion du toluène (méthylcyclohexane, éthylcyclopentane et les diméthylcyclopentanes) et $\Sigma T$ représentant la somme $\Sigma P$ + titre de toluène résiduel.

X est compris entre 0 et 1, X étant égal à 1 pour une conversion à 100 % du toluène.

$$I = 100 \times \frac{\text{Titre molaire du méthylcyclopentane}}{(\text{Titre molaire en méthylcyclopentane} + \text{titre molaire en cyclohexane résiduel})}$$

(l'activité en isomérisation I permet de mesurer l'acidité du catalyseur).

Le catalyseur utilisé est un catalyseur commercial de la société Procatalyse HR 346 renfermant en poids 3 % d'oxyde de Nickel NiO et 14 % d'oxyde de molybdène MoO3, ces composés de métaux actifs étant déposés sur une alumine. On a aussi utilisé un catalyseur commercial de la Société PROCATALYSE : HYC 642 renfermant des oxydes de nickel et de molybdène sur un support zéolitique.

D'autres catalyseurs d'hydrocraking sur support zéolithique tels que HTY ou S 5030 de la Société SHELL CHEMICAL ou encore les HC 14, HC 16 ou HC 22 de la Société UNOCAL (catalyseurs à base d'oxydes de nickel et de molybdène ou d'oxydes de nickel et de tungstène) ont notamment été utilisés.

Exemple 1 : (comparatif)

Dans cet exemple, on procède à une sulfuration du catalyseur en opérant selon la méthode du brevet européen EP-B-181254 en deux étapes :

Première étape :

On utilise pour la présulfuration du catalyseur, le TPS 37, fabriqué par ELF AQUITAINE et renfermant environ 37 % en poids de soufre environ, (la formule a été donnée dans la partie générale de cette demande de brevet); pour que l'ensemble du polysulfure soit adsorbé, il faut utiliser un volume de réactif (polysulfure + solvant du polysulfure) égal au volume d'imprégnation de la charge de catalyseur traité. C'est la connaissance de ce volume poreux total, ou volume d'imprégnation, qui détermine la quantité de solvant à utiliser. Dans le cadre du présent essai, ce volume, pour 100 g de catalyseur, est de 45 ml en moyenne (dont 60 % de solvant et 40 % de polysulfure). Le solvant utilisé est un White Spirit (température d'ébullition entre 150 et 250°C).

On utilise la stoechiométrie en soufre nécessaire pour sulfurer ultérieurement la totalité des oxydes (NiO, MoO3) soit 7,1 % S. On procède ainsi à l'imprégnation à sec du catalyseur, suivie d'une évaporation sous 10 mm de mercure (13 600 Pa) ou sous courant de gaz inerte.

Deuxième étape :

Le catalyseur est introduit dans le réacteur. On met le réacteur sous la pression d'un bar en présence d'air. (On obtiendrait les mêmes résultats sous une pression plus élevée, par exemple 60 bars). On chauffe le catalyseur pendant 1 heure.

On opère un test Tc réalisé à 150°C.

Le catalyseur devient noir, avec dépôt d'eau.

Le $SO_2$ dans les effluents gazeux est mesuré à l'aide d'un analyseur infrarouge de marque COSMA.

La teneur en soufre en poids, dans le catalyseur après le test est le suivant :

% S = 5,95

Le catalyseur est alors introduit dans le réacteur d'hydroraffinage :

On met le réacteur sous atmosphère d'hydrogène, à froid. La pression est portée à 60 bars et la température à 150 °C.

Les tests d'hydroraffinage sont effectué comme suit : on procède à l'injection de la charge à convertir puis on porte la température à 300°C pendant 1 heure puis à 350°C pour le test.

Pendant la première partie de la deuxième étape, on opère également non pas en présence d'air mais avec un mélange de 5 % en volume d'air d'une part et de 95 % en volume de vapeur d'eau initialement surchauffée à 115°C d'autre part (essai T'c).

Les résultats obtenus sont donnés dans le tableau ci-dessous

| | Tc | T'c |
|---|---|---|
| A | 0,83 | 1,10 |
| I | 0,74 | 1,03 |

Exemple 2 (selon l'invention) :

On procède comme dans l'exemple 1. Toutefois, la première étape est effectuée ici en présence d'additifs halogénés et/ou phosphorés.

On utilise 3 % en poids d'halogène ou de phosphore par rapport au polysulfure organique.

Chacun de ces additifs est ajouté dans le white spirit qui sert de solvant au polysulfure organique.

Les résultats des tests $T_1c$ (correspondant à Tc dans l'exemple comparatif) et $T_1'c$ (correspondant à T'c dans l'exemple comparatif) sont les suivants :

| | $T_1c$ | | | $T'_1c$ | |
|---|---|---|---|---|---|
| | A | I | | A | I |
| $CH_2$ F COOH | 0,82 | 0,72 | | 1,16 | 1,09 |
| CH $Cl_2$ COOH | 0,80 | 0,70 | | 1,17 | 1,10 |
| $CH_2$ Cl COOH | 0,81 | 0,72 | | 1,16 | 1,09 |
| $CBr_3$ COOH | 0,80 | 0,70 | | 1,18 | 1,11 |
| $CH_2$ Br COOH | 0,81 | 0,70 | | 1,16 | 1,09 |
| $CH_2$ I COOH | 0,81 | 0,70 | | 1,16 | 1,09 |
| $C_3$ $F_7$ COOH | 0,80 | 0,69 | | 1,19 | 1,12 |
| $H_3$ $PO_4$ | 0,78 | 0,62 | | 1,15 | 1,07 |
| $H_3$ $PO_3$ | 0,77 | 0,62 | | 1,15 | 1,07 |
| $(NH_4)$ $H_2$ $PO_4$ | 0,75 | 0,64 | | 1,14 | 1,06 |
| $(NH_4)_2$ H $PO_3$ | 0,76 | 0,63 | | 1,14 | 1,06 |
| $(NH_4)$ $H_2$ $PO_3$ | 0,76 | 0,62 | | 1,15 | 1,07 |
| $(NH_4)_2$ H $PO_3$ | 0,75 | 0,63 | | 1,15 | 1,06 |
| tri-p-tolylphosphine | 0,75 | 0,62 | | 1,16 | 1,08 |
| 50 % pds $C_3$ $F_7$ COOH | | | | | |
| 50 % pds tri-p- | | | | | |
| tolylphosphine | 0,77 | 0,60 | | 1,23 | 1,17 |

Ces résultats montrent d'une part que la technique selon l'invention est efficace quand la première partie de la deuxième étape est effectuée en présence d'eau mais d'autre part, que cette même technique est mauvaise quand on n'opère pas en présence d'eau et donne même des résultats légèrement inférieurs à ceux obtenus dans EP-B-181254.

## Revendications

1. Procédé d'introduction d'au moins un additif à base d'un halogène ou de phosphore au cours d'un procédé de traitement en deux étapes d'un catalyseur neuf ou régénéré renfermant ( a ) un support à base d'au moins un oxyde d'un métal ou d'un métalloïde et (b) au moins un métal actif, procédé de traitement dans lequel, dans une première étape réalisée "ex-situ" entre 0 et 50°C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

où n est un nombre entier de 3 à 20 et où R' représente un atome d'hydrogène ou un autre radical identique ou différent du radical R, ces 2 radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, le dit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode dans laquelle on traite le catalyseur, en présence d'au moins de la vapeur d'eau ou d'au moins de l'air humide ou un gaz inerte humide pendant au moins 5 minutes environ, "in-situ" ou "ex-situ", à une température comprise entre 65 et 275°C, sous une pression comprise entre environ 0,5 et 70 bars (0,05 et 7 MPa), le catalyseur étant à ce stade éventuellement séché, le procédé d'introduction d'additif étant caractérisé en ce que au cours de la première étape on ajoute en poids (poids exprimé en halogène ou en phosphore), par rapport au poids de polysulfure ou des polysulfures, 0, 1 à 10 % d'au moins un additif choisi dans le groupe constitué par le phosphore, les composés phosphorés, les halogènes et les composés halogénés.

2. Procédé selon la revendication 1 dans lequel on utilise 1 à 6 % en poids du dit additif par rapport au polysulfure utilisé.

3. Procédé selon la revendication 1 dans lequel on utilise 2 à 5 % en poids du dit additif par rapport au polysulfure utilisé.

4. Procédé selon la revendication 1 dans lequel on utilise au moins un additif renfermant un halogène et au moins un additif renfermant du phosphore, la quantité totale d'additif utilisée, en poids, et exprimée en halogène et en phosphore par rapport au poids de polysulfure, étant comprise entre 0,1 et 10 %.

5. Procédé selon l'une des revendications 1 à 4 appliqué à des catalyseurs notamment d'hydrocraquage, de craquage et des conversions d'hydrocarbures.

## Patentansprüche

1. Verfahren zur Einführung von mindestens einem Additiv auf der Basis eines Halogens oder von Phosphor im Verlauf eines zweistufigen Behandlungsverfahrens eines neuen oder regenerierten Katalysators, der a) einen Träger auf der Basis von mindestens einem metallischen Oxid oder einem Metalloid und b) mindestens ein aktives Metall beinhaltet, wobei die erste Stufe des Behandlungsverfahrens "ex situ" zwischen ungefähr 0 und 50°C und in Abwesenheit von Wasserstoff durchgeführt wird und der Katalysator mit Hilfe von mindestens einem Sulfidierungsmittel behandelt wird, so daß dieses Mittel teilweise oder in seiner Gesamtheit in der Porosität des Katalysators inkorporiert wird, wobei das Sulfidierungsmittel ein Polysulfid der allgemeinen Formel:

$$R - S_{(n)} - R'$$

ist, wobei n eine ganze Zahl zwischen 3 und 20 ist und R' für ein Wasserstoffatom oder einen anderen, mit dem Rest R identischen oder von diesem verschiedenen Rest steht, und diese beiden Reste jeweils durch einen organischen Rest gebildet ist, der zwischen 1 und 150 Kohlenstoffatomen pro Molekül aufweist und aus der Gruppe gewählt ist, die durch die Alkylreste, d.h. gesättigt oder ungesättigt, linear oder verzweigt oder vom Naphten-Typ, durch die Arylreste, die Alkylarylreste und die Arylalkylreste gebildet ist, wobei das Sulfidierungsmittel in einem Lösungsmittel gelöst verwendet wird, der Katalysator anschließend gegebenenfalls getrocknet wird und in einer zweiten anschließenden Verfahrensstufe, der in der ersten Verfahrensstufe erhaltene Katalysator, in Anwesenheit von zumindest Wasserdampf oder feuchter Luft, oder einem feuchten Inertgas mindestens ungefähr 5 Minuten, in situ oder ex situ, bei einer Temperatur zwischen 65 und 275°C, unter einem Druck zwischen ungefähr 0,75 bar (0,05 und 7 MPa) behandelt wird, wobei der Katalysator in diesem Stadium unter Umständen getrocknet wird, dadurch gekennzeichnet, daß im Verlauf der ersten Verfahrensstufe eine Menge von 0,1 bis 10 Gew.-%, bezüglich des Gewichtes des Polysulfids oder der Polysulfide von mindestens einem Additiv hinzugefügt wird, das aus der Gruppe gewählt wird, die durch Phosphor, die Phosphorverbindungen, die Halogene und die Halogenverbindungen gebildet ist, wobei sich die Gewichtsprozentangaben auf die Gewichte von Halogen und Phosphor beziehen.

2. Verfahren nach Anspruch 1, dadurch gekennzeichnet, daß 1 bis 6 Gew.-% des Additivs bezüglich des verwendeten Polysulfids hinzugefügt werden.

3. Verfahren nach Anspruch 1, dadurch gekennzeichnet, daß 2 bis 5 Gew.-% des Additivs bezüglich des verwendeten Polysulfids hinzugefügt werden.

4. Verfahren nach Anspruch 1, dadurch gekennzeichnet, daß mindestens ein, ein Halogen enthaltendes Additiv und mindestens ein Phosphor enthaltenes Additiv verwendet wird, wobei die Gesamtmenge von Additiv in Gew.-% und ausgedrückt in Halogen und Phosphor, bezüglich dem Gewicht des Polysulfids zwischen 0,1 und 10 Gew.-%, liegt.

5. Verfahren nach einem der vorhergehenden Ansprüche 1 bis 4, dadurch gekennzeichnet, daß es auf Katalysatoren angewandt wird, insbesondere Katalysatoren zum Hydrokracken, zum Kracken und zur Konversion von Kohlenwasserstoffen.

**Claims**

1. Process for the introduction of at least one additive with halogen or phosphorus base during a process of treatment in two stages of a new or regenerated catalyst containing (a) a support with a base of at least one oxide of a metal or a metalloid and (b) at least one active metal, process of treatment in which, in a first stage performed "ex situ" between about 0 and 50°C and in the absence of hydrogen, the catalyst is treated with at least one sulfurizing agent so as to incorporate this agent partially or totally in the porosity of the catalyst, the sulfurizing agent being a polysulfide of the general formula:

$$R - S_{(n)} - R'$$

where n is an integer from 3 to 20 and where R' represents a hydrogen atom or another radical identical or different from radical R, these two radicals thus each representing an organic radical containing 1 to 150 carbon atoms per molecule, these radicals being chosen from the group consisting of alkyl radicals, i.e, saturated or unsaturated, straight or branched or of naphthenic type, aryl radicals, alkylaryl radicals and arylalkyl radicals, said sulfurizing agent being used in solution in a solvent, the catalyst then being optionally dried, a process in which then, in a second stage, the catalyst obtained in the first stage is treated by a method in which the catalyst is treated' in the presence of at least steam or at least moist air or a moist inert gas for at least about 5 minutes, "in situ" or "ex situ," at a temperature between 65 and 275°C, under a pressure between about 0.5 and 70 bars (0.05 and 7 MPa), the catalyst at this stage optionally being dried, the process of additive introduction being characterized in that during the first stage, an addition by weight, (weight expressed in halogen or phosphorus), is made relative to the weight of polysulfide or polysulfides, 0.1 to 10% of at least one additive chosen from the group consisting of phosphorus, phosphorus compounds, halogens and halogen compounds.

2. Process according to claim 1 wherein 1 to 6% by weight of said additive is used relative to the polysulfide used.

3. Process according to claim 1 wherein 2 to 5% by weight of said additive is used relative to the polysulfide used.

4. Process according to claim 1 wherein at least one additive containing a halogen and at least one additive containing phosphorus are used, the total amount of additive used, by weight, and expressed in halogen and phosphorus relative to the weight of polysulfide, being between 0.1 and 10%.

5. Process according to one of claims 1 to 4 applied to catalysts particularly for hydrocracking, cracking and conversions of hydrocarbons.